# EUROPÄISCHE PATENTSCHRIFT

(11) **EP 3 176 492 B1**
(45) Veröffentlichungstag und Bekanntmachung des Hinweises auf die Patenterteilung: **02.09.2020**
(21) Anmeldenummer: 16200843.7
(22) Anmeldetag: 28.11.2016
(51) Int. Cl.: F21L 4/00

(54) **HANDLEUCHTGERÄT, INSBESONDERE EIN BAUSTELLENSTRAHLER**
HANDHELD LIGHTING DEVICE, IN PARTICULAR A CONSTRUCTION SITE SPOTLIGHT
LAMPE BALADEUSE, NOTAMMENT PROJECTEUR DE CHANTIER

(30) Priorität: 04.12.2015 DE 102015224361
(43) Veröffentlichungstag der Anmeldung: 07.06.2017
(73) Patentinhaber: Robert Bosch GmbH, 70442 Stuttgart (DE)
(72) Erfinder: Schaal, Thorsten, 70180 Stuttgart (DE); Paetz, Manuela, 70197 Stuttgart (DE); Koenig, Anja, 70771 Leinfelden-Echterdingen (DE)

(56) Entgegenhaltungen:
- WO-A1-2014/142383
- KR-A- 20030 090 333
- US-A1- 2005 265 035
- US-A1- 2007 171 082
- US-A1- 2015 311 747
- US-B1- 9 080 736

## Beschreibung

Die vorliegende Erfindung betrifft ein Handleuchtgerät, insbesondere einen Baustellenstrahler nach Anspruch 1.

Handleuchtgeräte, insbesondere Baustrahler sind grundsätzlich bekannt und werden in der Regel über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb des Handleuchtgerätes vielfach vorgesehen ist, Akkupacks einzusetzen. Handleuchtgeräte sind z.B. aus US 9 080 736 B1, KR 2003 0090333 A, US 2005/265035 A1 und US 2007/171082 A1 bekannt. US2015/0.311.747 offenbart ein Handleuchtgerät gemäß dem Oberbegriff des Anspruchs 1.

Derartige Akkupacks sind grundsätzlich bekannt und weisen wiederaufladbare Akkumulatoren, in der Regel eine Mehrzahl von in Parallel- und/oder Reihenschaltung verbundener Ackuzellen auf. Im Zuge dieser Anmeldung ist unter einem Akkupack somit ein vorzugsweise aus mehreren elektrisch zusammengeschalteten Akkuzellen bestehender Akkupack zu verstehen, der elektrische Energie speichern kann und die für den Betrieb eines elektrotechnischen Erzeugnisses und/oder einer Handwerkzeugmaschine benötigte Energie liefert. Es können beispielsweise drei in Reihe geschaltete, zylinderförmige Li-Ionen-Zellen mit z.B. je 3,6 V zu einer Gesamtspannung von 10,8 V vorgesehen sein.

Aus dem Stand der Technik sind Handleuchtgeräte bekannt, die ein Überwachungsmodul aufweisen, welches beispielsweise den Ladestatus des Akkupacks überwacht. Dabei erweist es sich als nachteilig, dass derartige Überwachungsmodule nur begrenzt von Nutzen sind, da die überwachten Daten nur vor Ort angezeigt werden.

### Offenbarung der Erfindung

Der vorliegenden Erfindung liegt die Aufgabe zugrunde, die oben genannten Nachteile zu verbessern und ein Handleuchtgerät, insbesondere einen Baustellenstrahler der eingangs genannten Art bereitzustellen, bei dem eine Übermittlung von Daten, Parametern oder dergleichen von und an eine externe Schnittstelle mit einfachem konstruktivem Aufwand auch über größere Entfernungen sicher ermöglicht wird und gleichzeitig eine Anpassung an andere Gegebenheiten hinsichtlich einer entsprechenden Verbindung zwischen dem Handleuchtgerät und einer externen Schnittstelle schnell und leicht zur Verfügung gestellt werden kann. Ferner ist es Aufgabe der Erfindung ein Handleuchtgerät, insbesondere einen Baustellenstrahler zu offenbaren, bei dem unter geringem Aufwand eine Kommunikationsschnittstelle für ein Handleuchtgerät zur Verfügung gestellt, eingebaut und ausgetauscht werden kann, wobei der Einbau- und/oder der Austauschprozess möglichst einfach und kostengünstig durchführbar sein sollen.

Diese Aufgabe wird durch ein Handleuchtgerät gemäß Anspruch 1 gelöst. Vorteilhafte Ausgestaltungen, Varianten und Weiterbildungen der Erfindung sind den Unteransprüchen zu entnehmen.

Gemäß der Erfindung ist ein Handleuchtgerät, insbesondere ein Baustellenstrahler mit einem Funkmodul offenbart, wobei das Funkmodul dazu ausgelegt ist, Informationen von zumindest einer externen Schnittstelle zu empfangen und/oder Informationen und/oder Steuerungsbefehle von zumindest einer externen Schnittstelle zu senden. Erfindungsgemäß ist vorgesehen, dass das Funkmodul in einem Gehäuse des Handleuchtgerätes angeordnet ist, wobei erfindungsgemäß vorgesehen ist, dass das Funkmodul als lösbares und somit separat entnehmbares Funkmodul in dem Gehäuse des Handleuchtgerätes angeordnet sein kann.

Bei dem Funkmodul handelt es sich hierbei um eine elektrotechnische Komponente, die zur Herstellung einer Kommunikationsverbindung über ein Funknetz in verschiedensten Bereichen eingesetzt wird. So werden Funkmodule beispielsweise bereits für Anwendungen im so genannten Maschine-zu-Maschine (Machine-to-Machine, M2M) Umfeld verwendet, wie zum Beispiel im

Bereich der Industrieautomatisierung, in Kraftfahrzeugen zur Unterstützung von Anwendungen im Bereich der Telematik oder auch zur Fernabfrage von Verbrauchszählern wie beispielsweise Strom-, Gas- oder Wasserzählern. Generell wird durch die Verwendung eines Funkmoduls ermöglicht, eine drahtlose Datenübertragung über ein Funknetz vorzunehmen, wodurch insbesondere Aufwände für eine anderenfalls erforderliche Verkabelung vermieden werden. Auf diese Weise kann eine Übermittlung von Daten, Parametern oder dergleichen von und an eine externe Schnittstelle mit einfachem konstruktivem Aufwand sicher ermöglicht werden.

Gemäß der Erfindung wird das Handleuchtgerät über einen ersten Energiespeicher, insbesondere über einen Akkupack eines Handwerkzeugs oder über eine Netzstromanbindung, mit Energie versorgt. Vorteilhafterweise handelt es sich bei diesem ersten Energiespeicher um einen austauschbaren, am Gehäuse angeordneten Schiebeakkupack oder Steckakkupack. Um das Funkmodul in einfacher Weise mit ausreichender Leistung versorgen zu können, ist gemäß einer bevorzugten Weiterbildung der Erfindung vorgesehen, dass das Funkmodul über die Stromversorgung des Handleuchtgerätes mit Energie versorgt wird. Dies kann beispielsweise mittels einer lösbaren Anbindung des Funkmoduls an eine Steuerelektronik des Handleuchtgerätes gewährleistet, werden, wodurch einerseits die Stromversorgung des Funkmoduls über die Stromversorgung des elektrotechnischen Erzeugnissen ermöglicht und andererseits der Batteriestatus des ersten Energiespeichers und/oder die daraus resultierende Restlaufzeit des Handleuchtgerätes an eine externe Schnittstelle übermittelt werden kann.

Erfindungsgemäß weist das Handleuchtgerät einen zweiten Energiespeicher auf, wobei das Funkmodul elektrisch mit dem ersten Energiespeicher und/oder mit dem zweiten Energiespeicher verbunden ist. In einer bevorzugten Ausführungsform ist vorgesehen, dass das Funkmodul in dem Fall, in dem der erste Energiespeicher vorhanden ist und über ausreichend Energie verfügt, über den ersten Energiespeicher mit Energie versorgt wird; und in jedem anderen Fall über den zweiten Energiespeicher versorgt wird. Auf diese Weise kann jederzeit einer Energieversorgung des Funkmoduls gewährleistet werden.

Vorteilhafterweise ist auch der zweite Energiespeicher wiederaufladbar. Entsprechend ist es von besonderem Vorteil, dass der zweite Energiespeicher in dem Fall, in dem der erste Energiespeicher vorhanden ist und über ausreichend Energie verfügt, über den ersten Energiespeicher mit Energie aufgeladen wird. Mittels des Funkmoduls ist eine Übermittlung des Batteriestatus des zweiten Energiespeichers an eine externe Schnittstelle möglich, so dass ein Nutzer des Handleuchtgerätes entsprechend rechtzeitig reagieren kann.

Bevorzugterweise weist das Gehäuse des Handleuchtgerätes eine Aufnahmeöffnung auf, in der das Funkmodul und/oder der zweite Energiespeicher herausnehmbar aufgenommen werden können. Auf diese Weise können das Funkmodul und/oder der zweite Energiespeicher lösbar an dem Handleuchtgerät angebracht werden, wobei die Aufnahmeöffnung einen einfachen und kostengünstigen Austausch des im Gehäuse des Handleuchtgerätes angeordneten Funkmoduls und/oder des zweiten Energiespeichers ermöglicht.

Vorteilhafterweise bildet das Gehäuse die Aufnahmeöffnung unmittelbar in der Gehäusewand des Handleuchtgerätes aus, wobei die Aufnahmeöffnung topfförmig oder kastenförmig mit einer Bodenfläche ausgeführt sein kann. Vorteilhafterweise ist die Aufnahmeöffnung durch einen Deckel verschließbar, wobei der Deckel vorzugsweise der Kontur der Gehäusewand folgt und bündig mit dieser abschließt. Der Deckel kann aus unterschiedlichen Kunststoffmaterialien wie beispielsweise PA6, PA6.6, PC (Polycarbonat), ABS (Acrylnitril-Butadien-Styrol-Copolymerisat) oder aus einem Materialmix verschiedener Kunststoffe und/oder glasfaserverstärkt ausgeführt sein. Vorzugsweise weist der Deckel das gleiche Material auf, wie das Gehäuse des Handleuchtgerätes.

Um einen sicheren, aber einfachen Zugang zur Aufnahmeöffnung und dem darin angeordneten zweiten Energiespeicher und/oder dem Funkmodul zu ermöglichen, ist es von Vorteil, wenn der Deckel eine schlitzförmige Vertiefung aufweist und vorzugsweise rotatorisch, insbesondere über einen Schraub- oder einen Bajonettverschluss lösbar verriegelt wird. Durch die schlitzförmige Vertiefung kann ein einfaches Öffnen des Deckels mittels einer Münze oder eines Schraubendrehers erfolgen. Der Bajonettverschluss lässt sich leicht betätigen und gewährleistet dennoch einen sicheren Verschluss der Aufnahmeöffnung. Alternativ kann der Deckel auch mittels wenigstens eines Verbindungselements, insbesondere mittels wenigstens einer Schraube am Gehäuse befestigt werden. Eine weitere Ausführungsform ist ein um eine Schwenkachse verschwenkbar gelagerter Deckel, welcher an einer der Schwenkachse gegenüberliegenden Seite des Deckels durch Verrasten, Verschrauben, Verklemmen oder Verspannen an dem Gehäuse lösbar arretiert werden kann. Auf diese Weise kann wirksam einem möglichen Abfallen des Deckels vom Gehäuse oder einem Verlieren des Deckels entgegengewirkt werden.

Ferner ist es von Vorteil, wenn der zweite Energiespeicher mittels einer Federbeaufschlagung in der Aufnahmeöffnung angeordnet ist, wodurch eine sichere Kontaktierung mit dem Funkmodul und/oder einer Kontaktplatine gewährleistet werden kann. Grundsätzlich kann vorgesehen sein, dass das entsprechende Federelement zwischen dem Deckel und dem zweiten Energiespeicher oder zwischen der Bodenfläche der Aufnahmeöffnung und dem zweiten Energiespeicher angeordnet ist, um den Energiespeicher bei geschlossenem Deckel gegen die innerhalb der Aufnahmeöffnung vorgesehenen Kontaktanschlüsse zu drücken. In einer bevorzugten Ausführungsform ist der zweite Energiespeicher austauschbar und/oder als eine Art Knopfbatterie ausgebildet.

Ein Austausch des zweiten Energiespeichers kann durch Öffnen des Deckels erfolgen, so dass ein Benutzer den zweiten Energiespeicher durch die Öffnung hindurch aus der Aufnahmeöffnung entnehmen und durch einen neuen, aufgeladenen Energiespeicher ersetzen kann. Durch erneutes Verschließen des Deckels ist der Energiespeicher sicher innerhalb der Aufnahmeöffnung aufbewahrt. Ein Austausch des gesamten Funkmoduls nebst dem zweiten Energiespeicher kann auf diese Weise umgangen und ein dauerhafter Betrieb auf einfache Art und Weise gewährleistet werden. Gemäß einer nicht beanspruchten Ausführungsform ist denkbar, dass der zweite wieder aufladbare Energiespeicher fest innerhalb des Gehäuses integriert ist, wobei in diesem Fall der zweite Energiespeicher elektrisch mit der Energieversorgung des Handleuchtgerätes verbunden ist, so dass der zweite Energiespeicher durch die von dem Stromnetz oder dem Akkupack des Handleuchtgerätes zur Verfügung gestellte Energie wieder aufgeladen werden kann. Vorteilhafterweise ist in diesem Fall eine Steuerelektronik innerhalb des Handleuchtgerätes vorgesehen, die in Abhängigkeit von der Energieversorgung des Handleuchtgerätes den zweiten Energiespeicher auflädt und/oder lediglich die Energieversorgung des Funkmoduls über die Energieversorgung des Handleuchtgerätes ermöglicht, wodurch ein dauerhafter Betrieb auf einfache Art und Weise gewährleistet werden kann.

Vorteilhafterweise ist das Funkmodul mit einer Steuerelektronik des Handleuchtgerätes verbunden oder (nicht beansprucht) in diese integriert, so dass beispielsweise (nicht beansprucht) die Schaltung des Funkmoduls auf der Steuerelektronik des Handleuchtgerätes untergebracht werden kann. Alternativ kann das Funkmodul auch eine eigene Steuerelektronik aufweisen.

Im Falle eines entnehmbaren Funkmoduls weist das Funkmodul wenigstens ein Verbindungselement, beispielsweise eine Simkartenkontaktierung und/oder Messerkontakte wie zum Beispiel zur Kontaktierung eines Akkupacks, zur Kontaktierung wenigstens ein Gegenverbindungselement der Steuerelektronik des Handleuchtgerätes auf. Entsprechend ist vorgesehen, dass im Falle eines entnehmbaren Funkmoduls eine separate Schnittstelle im Handleuchtgerät angeordnet ist; wobei vorteilhafterweise diese separate Schnittstelle unmittelbar auf der Steuerelektronik/Steuerelektronik des Handleuchtgerätes angeordnet ist.

Erfindungsgemäß ist vorgesehen, dass das Funkmodul wenigstens eine eigene Schnittstellenplatine zum drahtgebundenen Datenaustausch mit der Steuerelektronik des Handleuchtgerätes aufweist, wobei die Schnittstellenplatine des Funkmoduls wenigstens eine, vorzugsweise zwei Verbindungselemente, insbesondere Steckverbindungen aufweist, wobei wenigstens ein Verbindungselement den Datenaustausch und/oder die Energieversorgung mit oder durch die Steuerelektronik des Handleuchtgerätes gewährleistet und/oder ein weiteres Verbindungselement leitungsgebunden eine Kontaktplatine des zweiten Energiespeicher kontaktiert. Gemäß einer nicht beanspruchten Ausführungsform ist für ein derartiges fest eingebautes Funkmodul vorgesehen, dass sowohl die Steuerelektronik des Handleuchtgerätes als auch das Funkmodul Steckverbinder bzw. Gegensteckverbinder aufweisen, um den Datenaustausch zwischen der Schnittstellenplatine des Funkmoduls, bzw. zwischen der Steuerelektronik des Funkmoduls und/oder der Steuerelektronik des Handleuchtgerätes zu gewährleisten. Die Steckverbinder und die entsprechenden Gegensteckverbinder werden wiederum mittels Leitungen miteinander verbunden. Alternativ kann das Funkmodul unmittelbar mit der Steuerelektronik des Handleuchtgerätes lösbar, beispielsweise gesteckt, oder (nicht beansprucht) fest, beispielsweise gelötet, verbunden werden, um eine sichere Anbindung und Übertragung zu ermöglichen.

Erfindungsgemäß ist vorgesehen, dass die Schnittstellenplatine mittels einer Steckverbindung und/oder mittels Federkontakten und/oder steckbar mit der Steuerelektronik des Handleuchtgerätes verbunden und insbesondere verschraubt und/oder verklemmt innerhalb des Gehäuses angeordnet ist. Vorteilhafterweise wird das Funkmodul zum Schutz vor äußeren Einflüssen zusammen mit der Steuerelektronik des Handleuchtgerätes oder separat innerhalb des Gehäuses eingegossen. Ferner kann das Funkmodul innerhalb des Gehäuses vorinstalliert sein, nachgerüstet oder ausgetauscht werden. Dabei ist es besonders vorteilhaft, wenn das Funkmodul unmittelbar innerhalb der Aufnahmeöffnung austauschbar angeordnet ist.

Erfindungsgemäß empfängt und/oder sendet das Funkmodul ein Funksignal basierend auf elektromagnetischen Wellen, beispielsweise ein Bluetooth-Signal, insbesondere ein Bluetooth Low Energy Signal, ein WLAN-Signal oder ein NFC-Signal. Als bevorzugtes Ausführungsbeispiel eines solchen Funkmoduls kann beispielsweise ein WLAN-Modul, beispielsweise ein 868-MHz-Modul, ein 915-MHz-Modul oder auch ein Bluetooth-Module verwendet werden. Weitere Arten von Funkmodulen sind ebenfalls verwendbar. Bei dem Funknetz kann es sich dabei um ein Kommunikationsnetz eines beliebigen drahtlosen Kommunikationsstandards handeln, wie beispielsweise WLAN (Wireless Local Area Network), Bluetooth, GSM (Global System for Mobile Communications), GPRS (General Packet Radio Service) oder UMTS (Universal Mobile Telecommunications System). Darüber hinaus finden insbesondere im Bereich der Industrieautomatisierung zunehmend speziell an die entsprechenden Anforderungen angepasste drahtlose Kommunikationsnetze mit vergleichsweise kurzer Reichweite Anwendung, die auch als "Wireless Personal Area Network (WPAN)" bezeichnet werden. Als Beispiele hierfür seien Funknetze nach einem der Standards IEEE 802.15.4 oder WirelessHART genannt.

Vorteilhafterweise sendet ein aktives Funkmodul alle acht Sekunden ein Signal aus. Alternativ und in Abhängigkeit von der Energieversorgung kann das Signal auch in kürzeren oder auch in längeren Abständen ausgesendet werden. Insbesondere bei einer Energieversorgung durch den zweiten Energiespeicher kann das Funksignal beispielsweise alle zehn, 20 oder 30 Sekunden ausgesendet werden, wohingegen bei einer Energieversorgung durch den ersten Energiespeicher das Funkmodul beispielsweise alle vier oder sogar jede Sekunde ein Signal aussendet. Das entsprechende Funkmodul kann insbesondere seriell mit der Steuerelektronik, einer Messeinrichtung zur Messung von diversen elektrotechnischen Variablen oder dergleichen verbunden sein. Solche Variablen sind beispielsweise Angaben, wie beispielsweise Codes mittels derer eine Identifizierung des Erzeugnisses ermöglicht werden kann, oder Angaben über den An/Aus Status, über die Dauer des An/Aus Status, die Leuchtintensität, die Ladekapazität des am Handleuchtgerät befestigten Akkupacks, ein GPS Signal über den aktuellen Standort und/oder über den Standortverlauf usw..

Vorteilhafterweise werden über die externe Schnittstelle und das Funkmodul Steuerungsbefehle, wie beispielsweise das Einschalten, das Ausschalten und/oder ein Dimmen, an die Steuerungselektronik des Handleuchtgerätes übermittelt. Ferner kann eine definierte Zeit, in der ein derartiger Schaltvorgang, wie beispielsweise ein, aus und/oder dimmen, stattfinden soll und/oder eine Zeitdauer für den ein bestimmter Schaltzustand wie beispielsweise ein, aus und/oder gedimmt, gelten soll festgelegt und über das Funkmodul an die Steuerelektronik des elektrotechnischen Erzeugnisses übermittelt werden. Weiterhin ist es möglich, dass das elektrotechnische Erzeugnis über das Funkmodul von einem zuvor definierten Nutzer gesperrt und ein Zugriff durch einen unberechtigten Nutzer verhindert werden kann. Entsprechend ist es auch möglich, dass der Sperrstatus durch einen Nutzer abgefragt werden kann. Ferner kann erfindungsgemäß vorgesehen sein, dass das Funkmodul dazu ausgelegt ist, eine Auswertung von Ortszeitmessungen und/oder von GPS-Signalen zur Ortung des Handleuchtgerätes durchzuführen.

Erfindungsgemäß bildet das Funkmodul mit dem zweiten Energiespeicher ein eigenständiges Modul aus, welches separat und lösbar innerhalb des Gehäuses des Handleuchtgerätes einbringbar ist, wobei das

Modul beispielsweise durch eine Schraubverbindung oder durch andere Verbindungselemente lösbar an dem Gehäuse befestigt wird. Auf diese Weise ist das Funkmodul besonders kompakt ausgebildet und lässt sich schnell und einfach montieren, austauschen und/oder nachrüsten, so dass auch ein Austausch und/oder eine Reparatur schnell, einfach und kostengünstig erfolgen kann.

Die erfindungsgemäße Anordnung ist für beliebige Arten von Handleuchtgeräten einsetzbar. In einer besonders bevorzugten Ausführungsform ist das Handleuchtgerät als tragbares Handleuchtgerät, insbesondere als Baustrahler ausgestaltet, wobei das Funkmodul und damit das Handleuchtgerät, die Art des Handleuchtgerätes und/oder die darin verwendeten Leuchtmittel anhand eines ausgesendeten Codes identifiziert werden kann.

Das erfindungsgemäße Handleuchtgerät kann auch in einem System vorgesehen sein. Dementsprechend bildet auch ein Handleuchtgerät zusammen mit einer externen Einheit, die dazu ausgelegt ist, Informationen vom Funkmodul zu empfangen und/oder an das Funkmodul zu senden, einen weiteren Gegenstand der Erfindung. Erfindungsgemäß kann vorgesehen sein, dass die externe Einheit ein Smartphone oder eine elektrotechnische Datenverarbeitungsanlage ist. Durch dieses System wird mit einfachem konstruktivem Aufwand und über größere Entfernungen ein sicherer Austausch von Daten, Parametern oder dergleichen zwischen dem Handleuchtgerät und der externen Einheit ermöglicht, wodurch beispielsweise eine Kontrolle und/oder Steuerung der Betriebsmodi und/oder ein Wiederauffinden des Handleuchtgerätes erleichtert werden kann. Ferner können mittels einem erfindungsgemäßen Handleuchtgerät bzw. in einem erfindungsgemäßen System mehrere Handleuchtgeräte gruppiert und mittels der externen Schnittstelle und den jeweiligen Funkmodulen gemeinsam bedient werden. Dabei ist es besonders vorteilhaft, dass die Handleuchtgeräte mittels der externen Schnittstelle und/oder über ihre Funkmodule direkt miteinander kommunizieren können.

Weitere Merkmale, Anwendungsmöglichkeiten, Vorteile und Ausgestaltungen der Erfindung ergeben sich aus der nachfolgenden Beschreibung der Ausführungsbeispiele der Erfindung, welche in den Figuren dargestellt sind. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert. Die Zeichnungen sind schematisch und zeigen:
- Fig. 1: eine perspektivische Draufsicht einer ersten Ausführungsvariante eines erfindungsgemäßen Handleuchtgerätes mit einem eingesetzten Funkmodul;
- Fig. 2: eine perspektivische Unteransicht des erfindungsgemäßen Handleuchtgerätes aus Figur 1 mit einem zweiten Energiespeicher ohne Akkupack;
- Fig. 3: das erfindungsgemäße Handleuchtgerät aus Figur 1 mit einem eingesetzten Akkupack;
- Fig. 4: eine Schnittansicht durch das erfindungsgemäße Handleuchtgerät aus Fig. 2; und
- Fig. 5: eine perspektivische Unteransicht des erfindungsgemäßen Handleuchtgeräts aus Figur 1 ohne Akkupack mit einem in der Aufnahmeöffnung angeordneten Funkmodul.

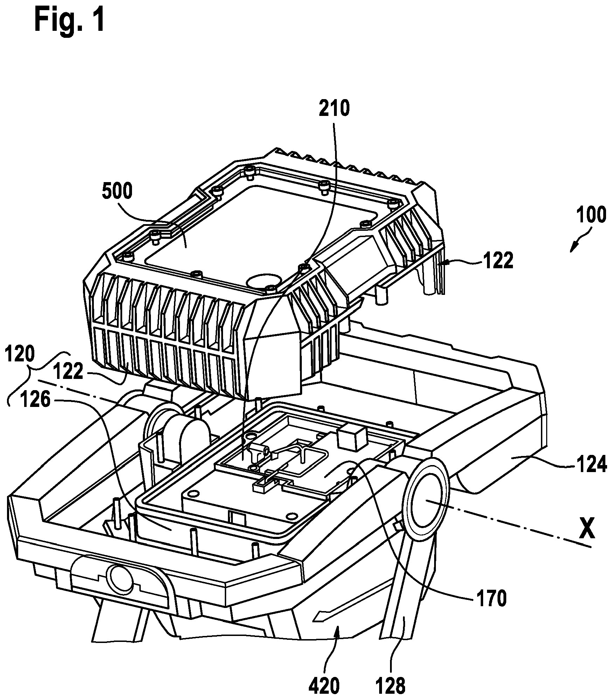

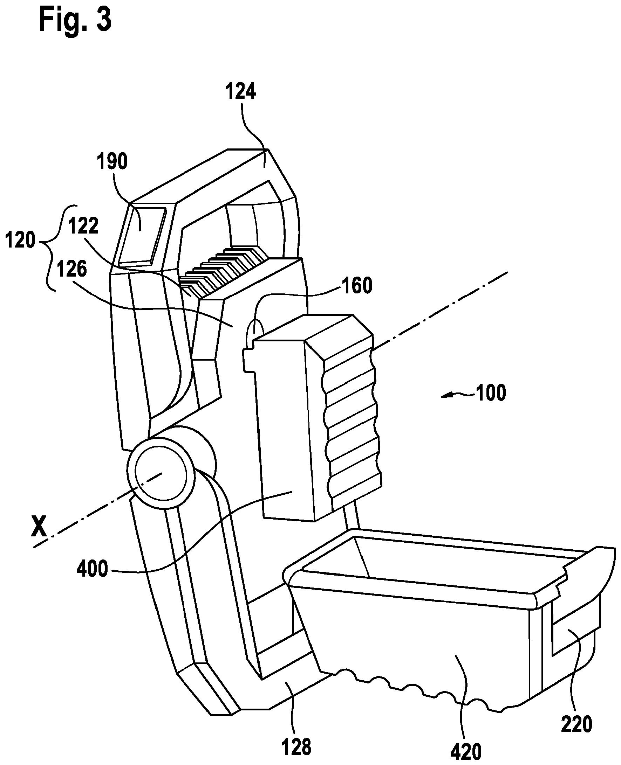

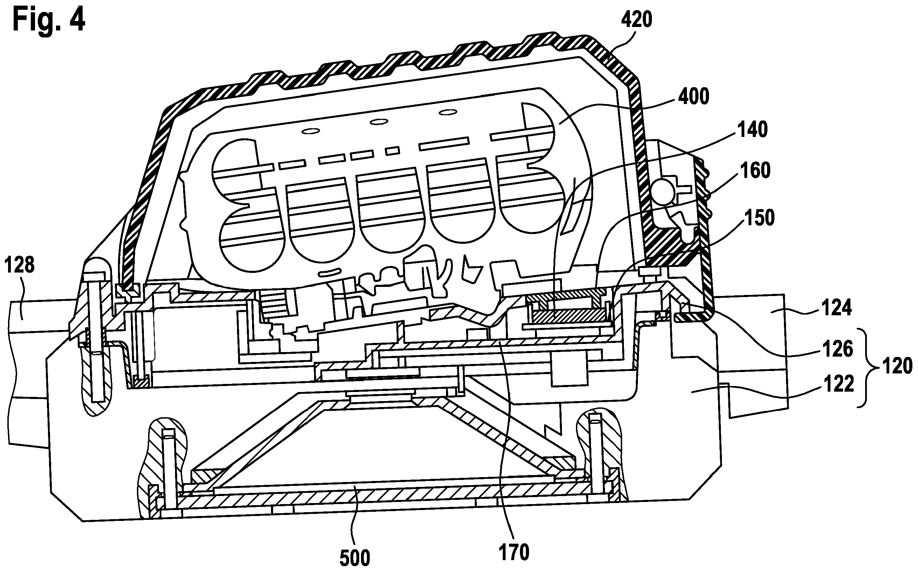

Die Figur 1 zeigt ein erfindungsgemäßes Handleuchtgerät 100, welches in der dargestellten Ausführungsform als Baustrahler ausgebildet ist. Gemäß der dargestellten Ausführungsform ist das Handleuchtgerät 100 zur netzunabhängigen Stromversorgung mechanisch und elektrisch mit einem Akkupack 400 verbunden. Grundsätzlich wird darauf hingewiesen, dass die vorliegende Erfindung nicht auf Baustrahler beschränkt ist, sondern vielmehr bei unterschiedlichen Handleuchtgeräten 100 Anwendung finden kann, welche mit einem Netzanschluss oder mit einem in Figur 3 und 4 dargestellten ersten Energiespeicher 400, insbesondere einem Akkupack zur netzunabhängigen Stromversorgung betrieben werden. In Figur 1 ist dieser erste Energiespeicher 400 unter einem dichten und geschlossen ausgebildeten Deckel 420 angeordnet und somit im Detail nicht zu erkennen. Der Deckel 420 ist vorteilhafterweise derart ausgeführt, dass er sowohl den Akkupack 400 als auch die darunter liegende Anschlussschnittstelle 380 und dadurch das Handleuchtgeräten 100 gegenüber Außeneinflüssen wie beispielsweise Regenwasser und/oder Staub abdichtet, wodurch das Handleuchtgeräten 100 eine IP (Ingress Protection bzw. International Protection) Klassifizierung erhält.

Das Handleuchtgerät 100 weist ein Gehäuse 120 mit einem Tragegriff 124 und einen klappbaren Stützfuss 128 auf. Sowohl der Stützfuss 128 als auch der Tragegriff 124 sind in der dargestellten Ausführungsform um eine Drehachse x schwenkbar an das Handleuchtgerät 100 befestigt. Das Gehäuse 120 weist zudem einen ersten Gehäuseabschnitt 122 und einen zweiten Gehäuseabschnitt 126 auf, in dessen Innenraum ein nicht dargestelltes Leuchtmittel, zum Beispiel eine Anzahl von Leuchtdioden, geschützt angeordnet werden kann, so dass sie vor Umwelteinflüssen geschützt sind. Der erste Gehäuseabschnitt 122 weist ferner eine transparente Abdeckung 500 auf, die von dem ausstrahlenden Licht der Leuchtmittel durchdrungen werden kann. Die Leuchtmittel werden von einer Steuerung, z. B. einer Steuerelektronik 170, angesteuert, die beispielsweise ein Schaltnetzteil oder dergleichen andere geeignete elektrische Mittel umfasst. Über einen nicht im Detail dargestellten elektrischen Schalter können die Leuchtmittel ein- und ausgeschaltet werden. Der elektrische Schalter ist im Innern des Gehäuses 120 geschützt angeordnet und über eine in Figur 3 erkennbare Druckfläche 190, die in der dargestellten Ausführungsform am Handgriff 124 angeordnet ist, betätigbar.

Bevorzugt ist die Steuerelektronik 170 des Handleuchtgerätes 100 bzw. des Baustrahlers so ausgestaltet, dass die Leuchtmittel in mehreren, beispielsweise drei Helligkeitsstufen, schaltbar sind. Entsprechend kann das Leuchtmittel des Handleuchtgerätes 100 durch aufeinanderfolgende Tastbestätigungen oder mittels gedrückt halten der Druckfläche 190, beispielsweise nacheinander eingeschaltet, auf eine höhere oder niedrigere Helligkeitsstufe geschaltet und/oder ausgeschaltet werden. Selbstverständlich sind alternativ auch andere Schalter, beispielsweise ein zusätzlicher "Helligkeitsschalter" in Form eines Schiebereglers, Drehschalters oder dergleichen denkbar. Die transparente Abdeckung 500 ist an einer Vorderseite des Gehäuses 120 vorgesehen. Der Stützfuss 128 dient unter anderem zum Abstellen des Handleuchtgerätes 100 auf einem Untergrund und dient dabei vorteilhaft dazu, sicheren Stand zu gewährleisten. Innerhalb des Gehäuses 120 ist zum einen die Steuerelektronik 170 und zum anderen das Funkmodul 210 angeordnet, wobei das Funkmodul 210 dazu ausgelegt ist, Informationen von zumindest einer externen, nicht dargestellten Schnittstelle zu empfangen und/oder an die externe Schnittstelle zu senden. Die Steuerelektronik 170 ist elektrisch mit den Leuchtmitteln verbunden. Das Funkmodul 210 ist mit der Steuerelektronik 170 des Handleuchtgerätes 100 verbunden oder kann alternativ (nicht beansprucht) auch unmittelbar in diese integriert sein. Ferner kann das Funkmodul 210 wenigstens eine eigene Schnittstellenplatine und vorteilhafterweise auch einen eigenen Datenspeicher aufweisen, wobei die Schnittstellenplatine 213 innerhalb des Gehäuses 120 lösbar, insbesondere verschraubt und/oder verklemmt, oder (nicht beansprucht) unlösbar angeordnet ist.

Um die Steuerelektronik 170 mit dem Funkmodul 210 zu verbinden, weisen sowohl die Steuerelektronik 170 als auch das Funkmodul 210 Steckverbinder bzw. Gegensteckverbinder auf. Die Steckverbinder und die entsprechenden Gegensteckverbinder werden mittels Leitungen miteinander verbunden. Alternativ kann (nicht beansprucht) das Funkmodul 210 unmittelbar auf die Steuerelektronik aufgesteckt oder gelötet werden, um eine sichere Anbindung zu ermöglichen. Das Funkmodul 210 sendet ein Funksignal, beispielsweise ein Bluetooth-Signal, ein WLAN-Signal oder ein NFC-Signal. Als bevorzugtes Ausführungsbeispiel eines solchen Funkmoduls kann beispielsweise ein WLAN-Modul, beispielsweise ein 868-MHz-Modul oder ein 915-MHz-Modul, oder auch ein Bluetooth-Modul verwendet werden. Weitere Arten von Funkmodulen sind ebenfalls verwendbar. Bei dem Funknetz kann es sich dabei um ein Kommunikationsnetz eines beliebigen drahtlosen Kommunikationsstandards handeln, wie beispielsweise WLAN (Wireless Local Area Network), Bluetooth, GSM (Global System for Mobile Communications), GPRS (General Packet Radio Service) oder UMTS (Universal Mobile Telecommunications System). Ferner ist es besonders vorteilhaft, wenn das Funkmodul 210 dazu ausgelegt ist, eine Auswertung, von Ortszeitmessungen, und/oder von GPS-Signalen zur Ortung des Handleuchtgerätes 100 durchzuführen.

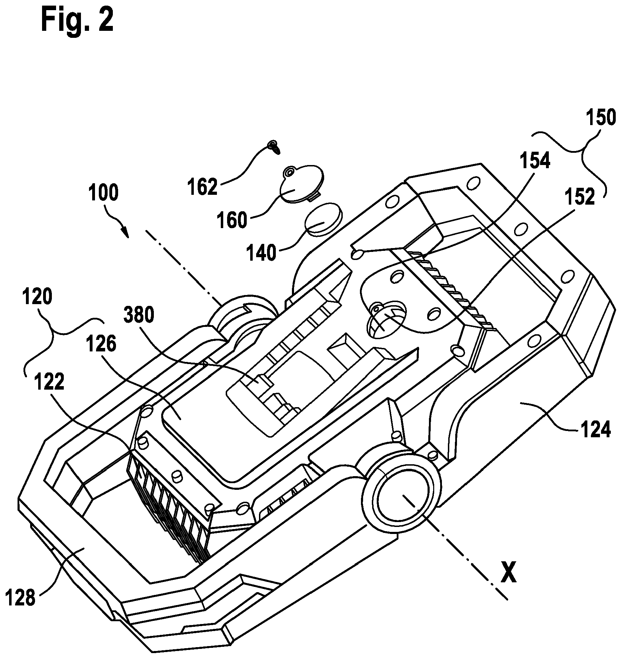

In den Figuren 2 und 3 ist das Handleuchtgerät 100 in einer Unteransicht ohne den IP-Deckel 420 bzw. mit abgeklapptem IP-Deckel 420 und dem darunter angeordneten ersten Energiespeicher 400 dargestellt. Figur 2 zeigt die Anschlussschnittstelle 380 zur Kontaktierung einer Gegenschnittstelle des Akkupacks 400 sowie eine Aufnahmeöffnung 150 zur Aufnahme eines zweiten Energiespeichers 140 und/oder, wie in Figuren 4 und 6 dargestellt, des Funkmoduls 210. Die Aufnahmeöffnung 150 ist in der dargestellten Ausführungsform topfförmig ausgeführt. Alternativ kann die Aufnahmeöffnung 150 auch eine andere Form haben, beispielsweise kastenförmig sein. Die dargestellte topfenförmige Aufnahmeöffnung 150 weist eine umlaufende Seitenwandung 152 und eine Bodenfläche 154 auf. Der zweite Energiespeicher 140 ist in den dargestellten Ausführungsformen als Knopfzellenbatterie ausgebildet. Die Aufnahmeöffnung 150 ist mittels eines Deckels 160 verschließbar. Der Deckel 160 wird in der in Figur 2 dargestellten Variante mittels eines Verbindungselementes 162, beispielsweise einer Schraube zusätzlich am Gehäuse 120 gesichert. Insbesondere bei dem dargestellten dauerhaft eingebauten Funkmodul 210 kann vorgesehen sein, dass innerhalb der Aufnahmeöffnung 150, insbesondere im Bereich der Bodenfläche eine nicht im Detail dargestellte Kontaktplatine zur Kontaktierung des zweiten Energiespeichers 140 angeordnet ist.

In der in Figur 4 dargestellten Schnittansicht ist der Akkupack 400 und der in der Aufnahmeöffnung 150 angeordnete zweite Energiespeicher 140 unter dem IP-Deckel 420 zu erkennen.

In einer alternativen nicht dargestellten Variante kann das Funkmodul 210 eine eigene Schnittstellenplatine und einen eigenen Datenspeicher aufweisen, oder (nicht beansprucht) in die Steuerelektronik 170 des Handleuchtgerätes 100 integriert sein. Die Schnittstellenplatine ist mittels einer Steckverbindung und/oder mittels Federkontakten mit der Steuerelektronik 170 verbunden, wobei wiederum die Kontaktplatine 213 lösbar, insbesondere verschraubt und/oder verklemmt, oder (nicht beansprucht) unlösbar innerhalb des Gehäuses 120 angeordnet ist.

Obwohl dies nicht in den Figuren abgebildet ist, sei grundsätzlich erwähnt, dass das Funkmodul 210 elektrisch mit dem ersten Energiespeicher 400, wie zum Beispiel dem Akkupack oder der externen Stromversorgung; und/oder mit dem zweiten Energiespeicher 140 verbunden ist. In dem Fall, in dem der erste Energiespeicher 400 insbesondere als Akkupack 400 oder als externe Stromversorgung vorhanden ist und über ausreichend Energie verfügt, wird das Funkmodul 210 über den ersten Energiespeicher 400 mit Energie versorgt, wohingegen in jedem anderen Fall das Funkmodul 210 über den zweiten Energiespeicher 140 mit Energie versorgt wird, so dass jederzeit eine Energieversorgung des Funkmoduls 210 gewährleitstet ist. Entsprechend ist es von Vorteil, wenn der zweite Energiespeicher 140 ebenfalls ein wiederaufladbarer Energiespeicher 140 ist, und er in dem Fall, in dem der erste Energiespeicher 400 vorhanden ist und über ausreichend Energie verfügt, über den ersten Energiespeicher 400 mit Energie aufgeladen wird. Im Falle eines wiederaufladbaren zweiten Energiespeichers 140 ist es ferner möglich, dass dieser fest innerhalb des Gehäuses 120 integriert ist (nicht dargestellt).

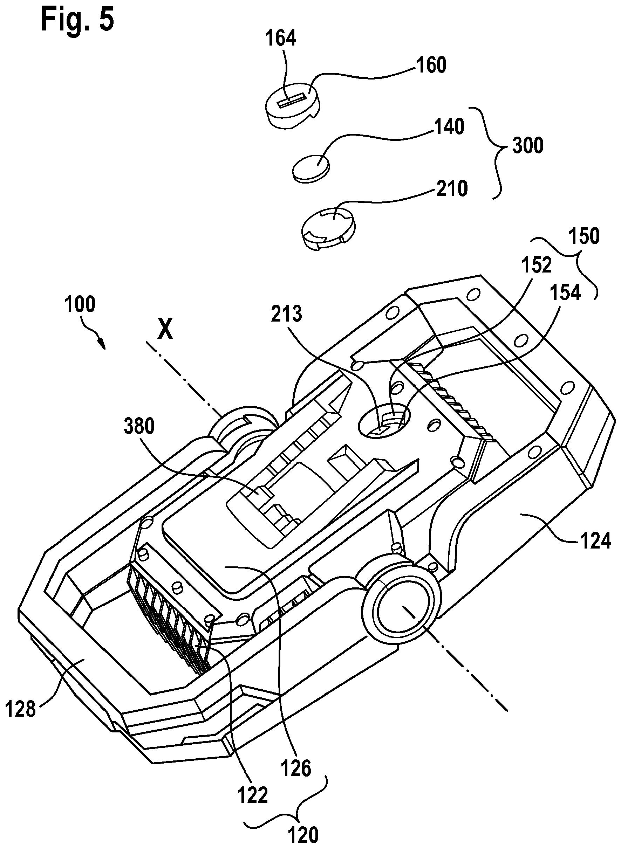

Wie in Figur 5 dargestellt, kann das Funkmodul 210 als Modul 300 ausgebildet und lösbar in der Aufnahmeöffnung 150 des Handleuchtgerätes 100 angeordnet sein. Das Modul 300 weist in der dargestellten Ausführungsvariante im Wesentlichen den zweiten, eigenen Energiespeicher 140 und das Funkmodul 210 auf, wobei das nicht im Detail dargestellte Gegenverbindungselement 213 der in der Handleuchtgerät 100 integrierten Schnittstellenplatine der Steuerelektronik 170 des Handleuchtgerätes 100 bereits in der Aufnahmeöffnung 150 angeordnet ist, um eine Kontaktierung zwischen dem Funkmodul 210 und/oder mit der Steuerelektronik 170 zu gewährleisten. Vorteilhafterweise handelt es sich bei dieser Kontaktierung um einen Berührungs-/Klemmkontakt, vorzugsweise um eine Simkartenkontaktierung, um den Datenaustausch zwischen dem Funkmodul 210 und/oder der Steuerelektronik 170 des Handleuchtgerätes 100 zu gewährleisten. Der zweite Energiespeicher 140 ist in der dargestellten Aufnahmeöffnung 150 lösbar auf dem Funkmodul 210 beispielsweise mittels einer Klemmverbindung angeordnet.

Die Schnittstellenplatine kann zusätzliche elektrische Einheiten und/oder Verbindungelemente, wie beispielsweise eine SIM-Karte oder weitere Steckverbinder aufweisen, um den Datenaustausch mit dem Funkmodul 210 und/oder mit der Steuerelektronik 170 des Handleuchtgerätes 100 zu gewährleisten. Der zweite Energiespeicher 140 ist in der dargestellten Aufnahmeöffnung 150 auf dem Funkmodul 210 geklemmt angeordnet. Das Modul 300 ist in die Aufnahmeöffnung 150 eingelegt und wird mit Hilfe des Deckels 160 in der Aufnahmeöffnung 150 gehalten, wobei das Modul 300 weitestgehend spielfrei in der Aufnahmeöffnung 150 angeordnet ist, wodurch wiederum Klappergeräusche oder dergleichen vermieden und ein versehentliches Lösen des Moduls 300 verhindert wird. Alternativ kann das Modul 300 beispielsweise mittels einer Klickverbindung in der Aufnahmeöffnung 150 einklickt werden. Der Deckel 160 ist in der in Figur 5 dargestellten Variante rotatorisch, insbesondere mittels eines Bajonettverschlusses an dem Gehäuse 120 anbringbar, wobei alternativ auch eine Schraubverschluss möglich wäre. Um ferner einen sicheren, aber einfachen Zugang zur Aufnahmeöffnung 150 und dem darin angeordneten zweiten Energiespeicher 140 und/oder dem Funkmodul 210 zu ermöglichen, weist der Deckel 160 eine schlitzförmige Vertiefung 164 auf. Durch die schlitzförmige Vertiefung 164 kann der Deckel 160 beispielsweise mittels einer Münze oder eines Schraubendrehers geöffnet werden. Eine weitere nicht dargestellte Ausführungsform ist ein um eine Schwenkachse verschwenkbar gelagerter Klappdeckel, welcher an der der Schwenkachse gegenüberliegende Seite durch Verrasten, Verschrauben, Verklemmen oder Verspannen an dem Gehäuse 120 lösbar arretiert werden kann. Durch einen derartigen Deckel 160 kann ein mögliches Abfallen des Deckels oder ein Verlieren des Deckels verhindert werden.

Grundsätzlich kann der Deckel 160 derart ausgeführt sein, dass er einer Kontur des Gehäuses 120 folgt und bündig mit dieser abschließt. Entsprechend kann der Deckel 160 aus unterschiedlichen Kunststoffmaterialien wie beispielsweise PA6, PA6.6, PC (Polycarbonat), ABS (Acrylnitril-Butadien-Styrol-Copolymerisat) oder aus einem Materialmix verschiedener Kunststoffe und/oder glasfaserverstärkt ausgeführt sein, wobei es von Vorteil ist, wenn der Deckel 160 das gleiche Material aufweist wie das Gehäuse 120 des Handleuchtgerätes 100. Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Handleuchtgerät (100), insbesondere ein Baustellenstrahler umfassend ein Gehäuse (120) und ein Funkmodul (210), wobei das Funkmodul (210) dazu ausgelegt ist, Informationen von zumindest einer externen Schnittstelle zu empfangen und/oder an zumindest eine externe Schnittstelle zu senden, wobei das Funkmodul (210) in dem Gehäuse (120) des Handleuchtgerätes (100) angeordnet ist, wobei das Funkmodul (210) wenigstens eine eigene Schnittstellenplatine aufweist, wobei das Funkmodul (210) innerhalb des Gehäuses (120) vorinstalliert, nachrüstbar oder austauschbar angeordnet ist und ein Funksignal, beispielsweise ein Bluetooth-Signal, insbesondere Bluetooth Low Energy Signal, ein WLAN-Signal empfängt und/oder sendet, und das Handleuchtgerät (100) über einen ersten Energiespeicher (400), insbesondere einen Akkupack mit Energie versorgt wird, **dadurch gekennzeichnet, dass** das Handleuchtgerät (100) einen zweiten Energiespeicher (140) aufweist, und dass das Funkmodul (210) mit dem zweiten Energiespeicher (140) ein Modul (300) bildet, welches lösbar an dem Gehäuse (120) anbringbar ist.

2. Handleuchtgerät (100) nach Anspruch 1, **dadurch gekennzeichnet, dass** das Funkmodul (210) elektrisch mit dem ersten Energiespeicher (400) und/oder mit dem zweiten Energiespeicher (140) verbunden ist.

3. Handleuchtgerät (100) nach einem der Ansprüche 1 oder 2, **dadurch gekennzeichnet, dass** das Funkmodul (210) in dem Fall, in dem der erste Energiespeicher (400) vorhanden ist und über ausreichend Energie verfügt, über den ersten Energiespeicher (400) mit Energie versorgt wird; und in jedem anderen Fall über den zweiten Energiespeicher (140) versorgt wird.

4. Handleuchtgerät (100) nach einem der Ansprüche 1 bis 3, **dadurch gekennzeichnet, dass** das Gehäuse (120) des Handleuchtgerätes (100) eine Aufnahmeöffnung (150) zur Aufnahme des zweiten Energiespeichers (140) aufweist; wobei die Aufnahmeöffnung (150) durch einen Deckel (160) verschließbar ist.

5. Handleuchtgerät (100) nach Anspruch 4, **dadurch gekennzeichnet, dass** der Deckel (160) rotatorisch, insbesondere über einen Schraub-, einen Bajonett- oder einen Klappverschluss, oder mittels eines wenigstens eines Verbindungselementes (162), insbesondere mittels wenigstens einer Schraube, am Gehäuse (120) verriegelt wird.

6. Handleuchtgerät (100) nach einem der Ansprüche 1 bis 5, **dadurch gekennzeichnet, dass** der zweite Energiespeicher (140) austauschbar ausgebildet ist.

7. Handleuchtgerät (100) nach einem der Ansprüche 1 bis 6, **dadurch gekennzeichnet, dass** der zweite Energiespeicher (140) wiederaufladbar ist.

8. Handieuchtgerät (100) nach Anspruch 7, **dadurch gekennzeichnet, dass** der zweite Energiespeicher (140) in dem Fall, in dem der erste Energiespeicher (400) vorhanden ist und über ausreichend Energie verfügt, über den ersten Energiespeicher (400) mit Energie aufgeladen wird.

9. Handleuchtgerät (100) nach einem der Ansprüche 1 bis 8, **dadurch gekennzeichnet, dass** das Funkmodul (210) mit einer Steuerelektronik (170) des Handleuchtgerätes (100) verbunden ist.

10. Handleuchtgerät (100) nach einem der vorhergehenden Ansprüche, **dadurch gekennzeichnet, dass** die Schnittstellenplatine über wenigstens ein Verbindungselement mit der Steuerelektronik (170) verbunden ist.

11. Handleuchtgerät (100) nach Anspruch 1 oder 10, **dadurch gekennzeichnet, dass** die Schnittstellenplatine innerhalb des Gehäuses (120) lösbar, insbesondere verschraubt und/oder verklemmt angeordnet ist.

12. Handleuchtgerät (100) nach einem der Ansprüche 1 bis 11, **dadurch gekennzeichnet, dass** das Handleuchtgerät (100) tragbares Handleuchtgeräte, insbesondere ein Baustrahler ist.

13. System, umfassend ein Handleuchtgerät (100) nach einem der Ansprüche 1 bis 12, sowie eine externe Schnittstelle, **dadurch gekennzeichnet, dass** die externe Schnittstelle dazu ausgelegt ist, Informationen vom Funkmodul (210) zu empfangen und/oder an das Funkmodul (210) zusenden.

14. System nach Anspruch 13, **dadurch gekennzeichnet, dass** die externe Schnittstelle ein Smartphone oder eine elektrotechnische Datenverarbeitungsanlage ist.

## Claims

1. Handheld lighting device (100), in particular a construction site spotlight, comprising a housing (120) and a radio module (210), wherein the radio module (210) is designed to receive information from at least one external interface and/or to transmit information to at least one external interface, wherein the radio module (210) is arranged in the housing (120) of the handheld lighting device (100), wherein the radio module (210) has at least one separate interface circuit board, wherein the radio module (210) is arranged inside the housing (120) in a pre-installed, retrofittable or replaceable manner and receives and/or transmits a radio signal, for example a Bluetooth signal, in particular a Bluetooth Low Energy signal, or a WLAN signal, and the handheld lighting device (100) is supplied with energy via a first energy store (400), in particular a rechargeable battery pack, **characterized in that** the handheld lighting device (100) has a second energy store (140), and **in that** the radio module (210) forms, with the second energy store (140), a module (300) which can be releasably fitted to the housing (120).

2. Handheld lighting device (100) according to Claim 1, **characterized in that** the radio module (210) is electrically connected to the first energy store (400) and/or to the second energy store (140).

3. Handheld lighting device (100) according to either of Claims 1 and 2, **characterized in that**, if the first energy store (400) is present and has sufficient energy, the radio module (210) is supplied with energy via the first energy store (400) and is supplied via the second energy store (140) in any other case.

4. Handheld lighting device (100) according to one of Claims 1 to 3, **characterized in that** the housing (120) of the handheld lighting device (100) has a receiving opening (150) for receiving the second energy store (140), wherein the receiving opening (150) can be closed by means of a cover (160).

5. Handheld lighting device (100) according to Claim 4, **characterized in that** the cover (160) is locked on the housing (120) in a rotational manner, in particular via a screw, bayonet or flap closure, or by means of at least one connecting element (162), in particular by means of at least one screw.

6. Handheld lighting device (100) according to one of Claims 1 to 5, **characterized in that** the second energy store (140) is replaceable.

7. Handheld lighting device (100) according to one of Claims 1 to 6, **characterized in that** the second energy store (140) is rechargeable.

8. Handheld lighting device (100) according to Claim 7, **characterized in that**, if the first energy store (400) is present and has sufficient energy, the second energy store (140) is charged with energy via the first energy store (400).

9. Handheld lighting device (100) according to one of Claims 1 to 8, **characterized in that** the radio module (210) is connected to control electronics (170) of the handheld lighting device (100).

10. Handheld lighting device (100) according to one of the preceding claims, **characterized in that** the interface circuit board is connected to the control electronics (170) via at least one connecting element.

11. Handheld lighting device (100) according to Claim 1 or 10, **characterized in that** the interface circuit board is arranged inside the housing (120) in a releasable manner, in particular in a screwed and/or clamped manner.

12. Handheld lighting device (100) according to one of Claims 1 to 11, **characterized in that** the handheld lighting device (100) is a portable handheld lighting device, in particular a construction site spotlight.

13. System comprising a handheld lighting device (100) according to one of Claims 1 to 12 and an external interface, **characterized in that** the external interface is designed to receive information from the radio module (210) and/or to transmit information to the radio module (210).

14. System according to Claim 13, **characterized in that** the external interface is a smartphone or an electrotechnical data processing system.

## Revendications

1. Lampe baladeuse (100), notamment projecteur de chantier comprenant un boîtier (120) et un module radio (210), dans lequel le module radio (210) est adapté pour recevoir et/ou transmettre des informations en provenance et/ou à destination d'au moins une interface externe, dans laquelle le module radio (210) est disposé dans le boîtier (120) de la lampe baladeuse (100), dans laquelle le module radio (210) comporte au moins une carte d'interface qui lui est propre, dans laquelle le module radio (210) est préinstallé, peut être installé ultérieurement ou est disposé de manière interchangeable dans le boîtier (120) et reçoit et/ou transmet un signal radio, par exemple un signal Bluetooth, notamment un signal Bluetooth Low Energy, un signal WLAN, et la lampe baladeuse (100) est alimentée en énergie par un premier accumulateur d'énergie (400), notamment un bloc-batterie, **caractérisée en ce que** la lampe baladeuse (100) comporte un deuxième accumulateur d'énergie (140), et **en ce que** le module radio (210) forme avec le deuxième accumulateur d'énergie (140) un module (300) qui peut être fixé de manière amovible au boîtier (120).

2. Lampe baladeuse (100) selon la revendication 1, **caractérisée en ce que** le module radio (210) est relié électriquement au premier accumulateur d'énergie (400) et/ou au deuxième accumulateur d'énergie (140).

3. Lampe baladeuse (100) selon l'une des revendications 1 ou 2, **caractérisée en ce que** le module radio (210) est alimenté en énergie par le premier accumulateur d'énergie (400) dans le cas où le premier accumulateur d'énergie (400) est présent et dispose d'une énergie suffisante ; et, dans tous les autres cas, est alimenté par le deuxième accumulateur d'énergie (140).

4. Lampe baladeuse (100) selon l'une des revendications 1 à 3, **caractérisée en ce que** le boîtier (120) de la lampe baladeuse (100) comporte une ouverture de réception (150) permettant de recevoir le deuxième accumulateur d'énergie (140) ; dans laquelle l'ouverture de réception (150) peut être fermée par un couvercle (160).

5. Lampe baladeuse (100) selon la revendication 4, **caractérisée en ce que** le couvercle (160) est verrouillé sur le boîtier (120) de manière à pouvoir tourner, notamment au moyen d'une fermeture à vis, à baïonnette ou à charnière, ou au moyen d'au moins un élément de liaison (162), notamment au moyen d'au moins une vis.

6. Lampe baladeuse (100) selon l'une des revendications 1 à 5, **caractérisée en ce que** le deuxième accumulateur d'énergie (140) est réalisé de manière à être interchangeable.

7. Lampe baladeuse (100) selon l'une des revendications 1 à 6, **caractérisée en ce que** le deuxième accumulateur d'énergie (140) est rechargeable.

8. Lampe baladeuse (100) selon la revendication 7, **caractérisée en ce que** le deuxième accumulateur d'énergie (140) est chargé en énergie par le premier accumulateur d'énergie (400) dans le cas où le premier accumulateur d'énergie (400) est présent et dispose d'une énergie suffisante.

9. Lampe baladeuse (100) selon l'une des revendications 1 à 8, **caractérisée en ce que** le module radio (210) est relié à l'électronique de commande (170) de la lampe baladeuse (100).

10. Lampe baladeuse (100) selon l'une des revendications précédentes, **caractérisée en ce que** la carte d'interface est reliée à l'électronique de commande (170) par au moins un élément de liaison.

11. Lampe baladeuse (100) selon la revendication 1 ou 10, **caractérisée en ce que** la carte d'interface est disposée à l'intérieur du boîtier (120) de manière amovible, notamment vissée et/ou serrée.

12. Lampe baladeuse (100) selon l'une des revendications 1 à 11, **caractérisée en ce que** la lampe baladeuse (100) est une lampe baladeuse portable, notamment un projecteur de chantier.

13. Système comprenant une lampe baladeuse (100) selon l'une des revendications 1 à 12, ainsi qu'une interface externe, **caractérisé en ce que** l'interface externe est adaptée pour recevoir des informations en provenance du module radio (210) et/ou pour transmettre des informations au module radio (210).

14. Système selon la revendication 13, **caractérisé en ce que** l'interface externe est un téléphone intelligent ou un système électrotechnique de traitement des données.
